# EUROPEAN PATENT SPECIFICATION

(11) **EP 1 066 487 B1**
(45) Date of publication and mention of the grant of the patent: **14.05.2003**
(21) Application number: 00903065.1
(22) Date of filing: 26.01.2000
(51) Int. Cl.: F24F 1/00, F24F 5/00, F24F 7/00, F24F 13/072

(54) **APPARATUS FOR CEILING MOUNTING FOR VENTILATION OF ROOMS AND SIMULTANEOUS COOLING OR HEATING OF THE ROOM AIR**
VORRICHTUNG ZUR DECKENMONTAGE DER RAUMBELÜFTUNG UND GLEICHZEITIGE LUFTKÜHLUNG ODER HEIZUNG VON RÄUMEN
DISPOSITIF DE MONTAGE AU PLAFOND POUR VENTILATION DE LOCAUX ET REFROIDISSEMENT OU RECHAUFFAGE SIMULTANE DE L'AIR DES LOCAUX

(30) Priority: 26.01.1999 SE 9900214
(43) Date of publication of application: 10.01.2001
(73) Proprietor: Stifab Farex AB, 671 29 Arvika (SE)
(72) Inventor: TIGER, Jonas, S-671 33 Arvika (SE); BIÖRKLUND, Staffan, S-670 35 Gunnarskog (SE); ERICKSSON, Göran, S-184 60 Akersberga (SE)
(74) Representative: Hammar, Ernst
(86) International application number: SE0000154
(87) International publication number: WO00045094

(56) References cited:
- EP-A1- 0 834 705
- WO-A1-94/24491
- WO-A1-98/09115
- DE-A1- 3 321 612
- FR-A- 1 347 152
- GB-A- 2 271 175
- SE-A- 9 802 215
- SE-A- 9 802 216
- US-A- 3 833 057

## Description

The invention relates to an apparatus for ceiling mounting for ventilation of premises and simultaneous cooling and/or heating of the room air. An apparatus according to the preamble of claim 1 is known from DE-A-33 21 612.

Previously known ceiling-mounted apparatuses for ventilation and cooling/heating of the free-hanging type, which as such are mounted wholly under the ceiling and, unlike other similar ceiling-mounted apparatuses, are not recessed wholly or partially in the ceiling, are associated with a number of disadvantages. Since the air intake is designed for air flowing in from above in these known free-hanging baffles, circulation openings of 50 to 100 mm between ceiling and baffle are needed, and since the air flows out in the lower part, the apparatuses have to be high up in the premises so as not to cause unnecessary draught problems. Another disadvantage is that heated/cooled room air cannot be blown out along and near to the ceiling, which on the one hand is desirable for flow technology reasons and on the other hand causes the least possible draught in the premises. In known free-hanging apparatuses, the air therefore has to be blown out at the lower part of the apparatus, similarly to the known apparatuses intended to be recessed in the ceiling. This in turn entails a further disadvantage, namely that the treated air flowing out crosses the path of the room air which is being sucked into the apparatus from above. In the case of the recessed apparatuses, the problem of getting the air to flow out near to and along the ceiling is therefore solved quite simply by the recessed fitting, so that the lower part of the apparatus coincides with or lies near the level of the ceiling. Reference may be made here, for example, to the apparatuses which are described in our earlier publications EP-B-0692084, EP-A-0857283 and in applications SE-A-9802215-5 and SE-A-9802216-3, all of which apparatuses allow the treated air to be blown out close to and along the ceiling of the premises.

The object of the invention is to make available a ceiling-mounted apparatus, of the type described in the introduction, with a free-hanging baffle, but without the disadvantages which have been associated with these. Thus, the apparatus according to the invention has less structural height than previously known free-hanging baffles, and at the same time the treated air is blown out near to and along the ceiling. The stated problem of intersecting air streams is also completely eliminated.

To this end, the invention is characterized by the features which are set out in claim 1.

The bottom part of the distribution chamber has either a perforated plate, one or more gaps, or a screen, for distributing the inflowing room air to the battery or the batteries.

The apparatus is preferably designed with a battery arranged on both sides of the primary air channel, but in special cases, for example because of the positioning in the premises, it may be desirable to have only one battery, i.e. in practice half a baffle, in which case the apparatus can be mounted with the primary air channel running longitudinally close to a wall. The battery or the batteries can be arranged parallel to the ceiling or, in those cases where the primary air channel is designed with sides which are inclined in relation to the ceiling, the battery or the batteries can also be arranged correspondingly at an inclination to the ceiling.

The mixing chamber can either as a whole constitute part of the actual baffle and thus have its own upper boundary surfaces, or it is formed only when the baffle is mounted next to the ceiling, in which case the ceiling itself will constitute the upper boundary surface of the mixing chamber.

Some of the important advantages which the invention affords in comparison to previously known free-hanging types can be summarized as follows:
- Circulating air (hot) is here completely separated from the mixture of circulating/primary air (cold). Previously known free-hanging apparatuses are associated with problems of "short-circuiting", when hot circulating air which has been sucked in and is flowing upwards along the vertical side of the baffle has to pass (cross) the cold mixture of primary air/circulating air which is being blown out from the vertical side of the baffle.
- Less structural height is needed, as the baffle can be advantageously mounted close to the ceiling.
- The casting lengths for the treated air being blown out, mixed with primary air, are extended by the fact that the air mixture can be blown out along and directly adjacent to the ceiling. Extended casting lengths afford increased mixing of room air, which means less risk of draught and improved utilization of ceiling and walls.

Embodiments of the invention will now be described in greater detail with reference to the drawings.

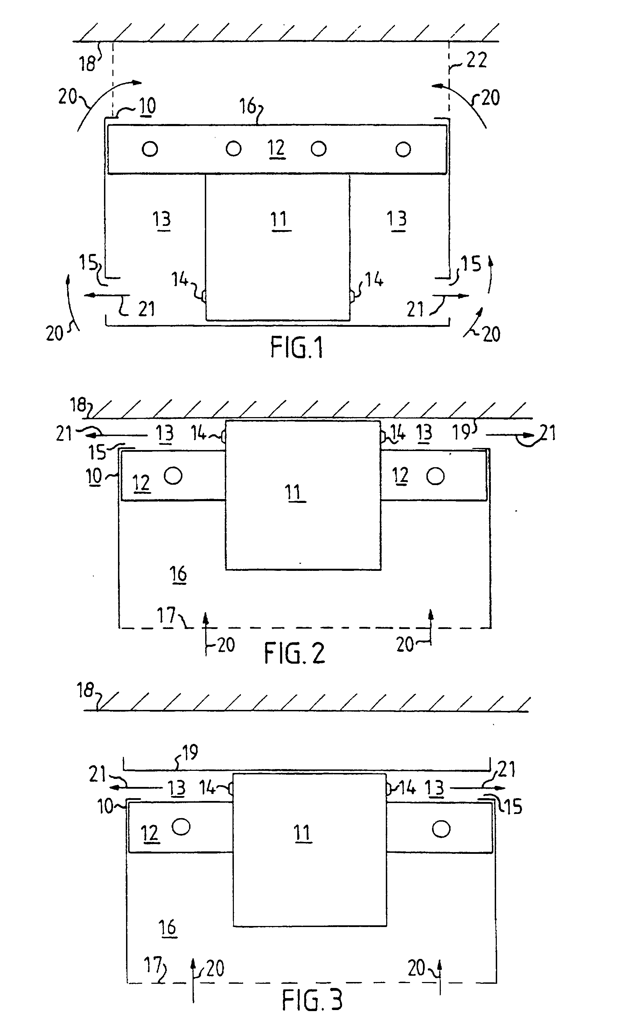

Figure 1 shows a diagram of a known construction and has also been labelled PRIOR ART, while Figures 2 to 6 show diagrams of five different preferred embodiments of the invention.

Figure 1 shows a known apparatus (PRIOR ART) with a free-hanging baffle 10 seen in cross section, which baffle 10 is arranged at a distance from a ceiling 18 and has a longitudinal primary air channel 11 and a battery 12 for cooling/heating the room air. Under the battery 12, on each side of the primary air channel 11, there are mixing chambers 13 with outlet openings 15, which chambers 13 are intended for mixing primary air, supplied via members 14, and room air which has been drawn by induction from this primary air and has passed the battery 12 and thus been cooled or heated, depending on the function of the apparatus. Above the battery 12, there is a distribution chamber 16 where the room air is distributed across the whole battery 12 before passing through the latter. During use of the apparatus, primary air is supplied through the channel 11 with such energy that, as a result of induction, i.e. underpressure created in the mixing chamber 13, it sucks room air from above into the baffle 10, as has been indicated by the arrows 20. This room air is sucked further down through the battery 12 and into the mixing chamber 13 where it meets and is mixed with primary air supplied via the members 14, which can be of a nozzle type. The air thus treated and mixed is blown out through the openings 15 at a distance from the ceiling 18, as is indicated by the arrows 21. When this air stream 21 emerges from the baffle 10, it meets an upwardly flowing stream of room air 20, which causes problems since a certain and unintended mixing of these streams cannot be avoided, which is contrary to the intended function of the baffle.

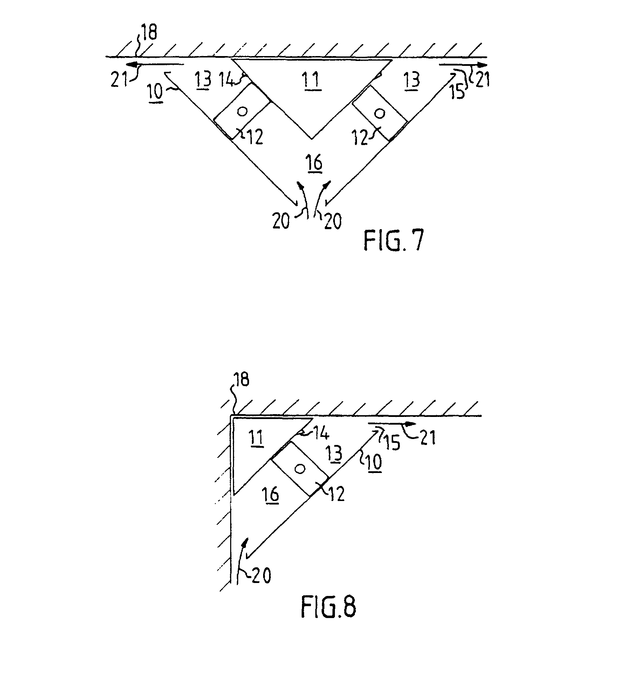

Figures 2 to 7 show examples of various embodiments of an apparatus according to the invention; Figures 2 to 5 show apparatuses with a rectangular or square primary air channel, and with the batteries parallel to the ceiling, while Figures 6 and 7 show a variant, which may sometimes be preferred, with the battery or the batteries at an angle to the ceiling. All the apparatuses according to Figures 2 to 7 also have baffles 10, batteries 12 for cooling/heating, mixing chambers 13, members 14 for supply of primary air, outlet openings 15, and distribution chambers 16. The common feature of the embodiments according to the invention, which also distinguishes it from the known apparatus in Figure 1, is that the mixing chamber 13 is arranged above or obliquely above the batteries 12 and, consequently, the distribution chamber is arranged under these. Room air 20 thus passes from underneath into the distribution chamber 16 and upwards through the batteries 12 to the mixing chamber 13, where the air meets the primary air which has been blown in through the members (nozzles) 14 arranged near the ceiling 18. The resulting mixture of treated room air and primary air flows out from the mixing chamber 13 near the ceiling 18 and in a horizontal direction, which is indicated by the arrows 21. It will be appreciated that the inward and outward air streams do not cross each other here, and the risk of short-circuiting is therefore eliminated.

According to the invention, the room air can be drawn into the distribution chamber by means of its bottom part 17 being designed as a perforated plate, as is indicated in Figure 2, through a screen, as is indicated in Figure 5, or through one or more gaps, as is indicated in Figure 6.

The baffle 10 can be placed close to the ceiling, as is indicated in Figures 2 and 4-6, or hanging down, as in Figure 3. In those cases where the baffle 10 is placed close to the ceiling, the upper part 19 of the mixing chamber, its roof, can advantageously consist of the ceiling 18. The baffle 10 can also include such a roof 19; this is necessary in the hanging design, but can also be used in baffles intended to be placed close to the ceiling.

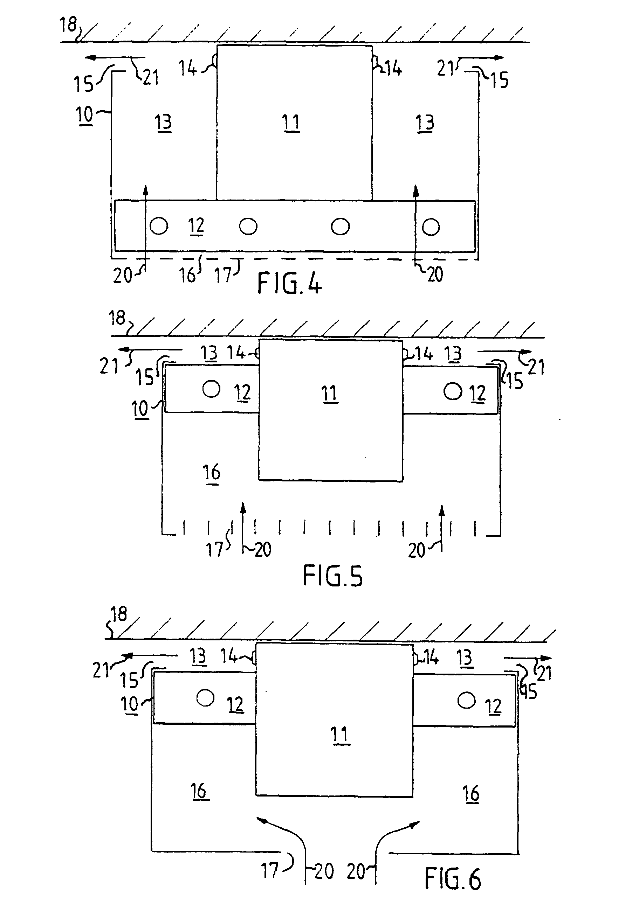

In those cases where the primary air channel has a rectangular or square shape, the battery or the batteries 12 can be placed on the vertical sides of the primary air channel 13, as is indicated in Figures 2-3 and 5-6, or under the primary air channel 13 directly connected to its bottom part, as is indicated in Figure 4.

In those cases where the primary air channel 11 has a triangular shape, as is indicated in Figures 6 and 7, the battery or the batteries 12 are inclined in relation to the ceiling 18, and preferably at right angles to the side of the primary air channel 11.

If the primary air channel 11 has a shape other than square or triangular, as illustrated here in the figures, batteries 12 can preferably be arranged either horizontally at right angles to a vertical side, if such exists, in the same way as with a square channel, or inclined in relation to the ceiling 18, in the same way as with the triangular channel 11.

## Claims

1. Apparatus for ceiling mounting for ventilation of premises and simultaneous cooling and/or heating of the room air, which apparatus comprises a free-hanging baffle (10) or cooling/heating, which has a longitudinal channel (11) for supply of primary air, at least one battery (12) for cooling/heating the room air, at least one mixing chamber (13) for cooled/heated room air and primary air, members (14) for supplying primary air to each mixing chamber (13) with an induction effect which ensures both suction of room air into the apparatus and its onward passage through each battery (12), and also outlet openings (15) for an essentially horizontally outflowing mixture of cooled/heated room air and primary air, each battery (12) being arranged at least on one side of the longitudinal primary air channel (11) or being directly connected under this, under each battery (12) there being a distribution chamber (16) for receiving room air flowing in through openings in its bottom part (17) and for onward distribution of the air to each battery (12), **characterized in that** each mixing chamber (13) and the outlet openings (15) are arranged above each battery (12) so that the apparatus, in the mounted state, has each mixing chamber (13) and the oulet openings (15) situated adjacent to the ceiling (18) of the premises or at least near this, thereby ensuring a horizontal outflow of the air mixture near to and along the ceiling (18).

2. Apparatus according to Claim 1, **characterized in that** the bottom part (17) of the distribution chamber comprises a perforated plate.

3. Apparatus according to Claim 1, **characterized in that** the bottom part (17) of the distribution chamber comprises one or more gaps.

4. Apparatus according to Claim 1, **characterized in that** the bottom part of the dis tribution chamber comprises a screen.

5. Apparatus according to Claims 1 to 4, **characterized in that** the batteries (12) are arranged on both sides of the primary air channel (11).

6. Apparatus according to Claims 1 to 5, **characterized in that** the mixing chamber (13) is arranged with upper boundary surfaces (19).

7. A ceiling with the mounted apparatus according to Claims 1 to 5, **characterized in that**, the upper boundary surfaces (19) of the mixing chamber (13) are formed by the ceiling (18).

## Patentansprüche

1. Vorrichtung zur Deckenmontage für die Belüftung von Räumlichkeiten und zum gleichzeitigen Kühlen und/oder Heizen der Raumluft, wobei die Vorrichtung eine frei hängende Ablenkplatte (10) zum Kühlen/Heizen, welche einen Längskanal (11) zur Zufuhr von Primärluft aufweist, mindestens eine Batterie (12) zum Kühlen/Heizen der Raumluft, mindestens eine Mischkammer (13) für gekühlte/geheizte Raumluft und Primärluft, Elemente (14) zur Zufuhr von Primärluft zu jeder Mischkammer (13) mit einer Induktionswirkung, die sowohl das Saugen von Raumluft in die Vorrichtung als auch ihren Vorwärtsdurchgang durch jede Batterie (12) sicherstellt, und auch Auslaßöffnungen (15) für ein im wesentlichen horizontal ausströmendes Gemisch von gekühlter/geheizter Raumluft und Primärluft umfaßt, wobei jede Batterie (12) zumindest auf einer Seite des Primärluft-Längskanals (11) angeordnet ist oder direkt unter diesem angeschlossen ist, wobei sich unter jeder Batterie (12) eine Verteilerkammer (16) zum Aufnehmen von Raumluft, die durch Öffnungen in ihrem unteren Teil (17) einströmt, und zur Vorwärtsverteilung der Luft zu jeder Batterie (12) befindet, **dadurch gekennzeichnet, daß** jede Mischkammer (13) und die Auslaßöffnungen (15) oberhalb jeder Batterie (12) angeordnet sind, so daß bei der Vorrichtung in dem montierten Zustand jede Mischkammer (13) und die Auslaßöffnungen (15) benachbart zur Decke (18) der Räumlichkeiten oder zumindest nahe dieser liegen, wodurch eine horizontale Ausströmung des Luftgemisches nahe zur und entlang der Decke (18) sichergestellt wird.

2. Vorrichtung nach Anspruch 1, **dadurch gekennzeichnet, daß** der untere Teil (17) der Verteilerkammer eine perforierte Platte aufweist.

3. Vorrichtung nach Anspruch 1, **dadurch gekennzeichnet, daß** der untere Teil (17) der Verteilerkammer einen oder mehrere Spalte aufweist.

4. Vorrichtung nach Anspruch 1, **dadurch gekennzeichnet, daß** der untere Teil der Verteilerkammer ein Sieb aufweist.

5. Vorrichtung nach den Ansprüchen 1 bis 4, **dadurch gekennzeichnet, daß** die Batterien (12) auf beiden Seiten des Primärluftkanals (11) angeordnet sind.

6. Vorrichtung nach den Ansprüchen 1 bis 5, **dadurch gekennzeichnet, daß** die Mischkammer (13) mit oberen Grenzflächen (19) angeordnet ist.

7. Decke mit der montierten Vorrichtung nach den Ansprüchen 1 bis 5, **dadurch gekennzeichnet, daß** die oberen Grenzflächen (19) der Mischkammer (13) durch die Decke (18) gebildet sind.

## Revendications

1. Dispositif de montage au plafond pour ventilation de locaux et refroidissement et/ou réchauffage simultané de l'air ambiant, lequel dispositif comprend un déflecteur à suspension libre (10) pour refroidissement/réchauffage, lequel présente un canal longitudinal (11) pour une alimentation d'air primaire, au moins une batterie (12) pour refroidir/réchauffer l'air ambiant, au moins une chambre de mélange (13) pour l'air ambiant et l'air primaire refroidis/réchauffés, des éléments (14) pour fournir l'air primaire à chaque chambre de mélange (13) avec un effet d'induction qui assure à la fois une aspiration d'air ambiant dans le dispositif et son passage vers l'avant à travers chaque batterie (12), et également des ouvertures de sortie (15) pour un mélange sortant, en s'écoulant de manière essentiellement horizontale, d'air ambiant et d'air primaire refroidis/réchauffés, chaque batterie (12) étant disposée au moins sur un côté du canal longitudinal d'air primaire (11) ou étant directement reliée sous celui-ci, une chambre de répartition (16) étant prévue sous chaque batterie (12) pour recevoir l'air ambiant s'écoulant dedans à travers des ouvertures dans sa partie inférieure (17) et pour une répartition vers l'avant de l'air vers chaque batterie (12), **caractérisé en ce que** chaque chambre de mélange (13) et les ouvertures de sortie (15) sont disposées au-dessus de chaque batterie (12) de sorte que le dispositif, dans l'état monté, présente chaque chambre de mélange (13) et les ouvertures de sortie (15) situées de manière adjacente au plafond (18) des locaux ou au moins près de celui-ci, en assurant ainsi un échappement horizontal du mélange d'air près du plafond (18) et le long de celui-ci.

2. Dispositif selon la revendication 1, **caractérisé en ce que** la partie inférieure (17) de la chambre de répartition comprend une plaque perforée.

3. Dispositif selon la revendication 1, **caractérisé en ce que** la partie inférieure (17) de la chambre de répartition comprend un ou plusieurs intervalles.

4. Dispositif selon la revendication 1, **caractérisé en ce que** la partie inférieure de la chambre de répartition comprend un écran.

5. Dispositif selon les revendications 1 à 4, **caractérisé en ce que** les batteries sont disposées des deux côtés du canal d'air primaire (11).

6. Dispositif selon les revendications 1 à 5, **caractérisé en ce que** la chambre de mélange (13) présente des surfaces limites supérieures (19).

7. Un plafond avec le dispositif monté selon les revendications 1 à 5, **caractérisé en ce que** les surfaces limites supérieures (19) de la chambre de mélange (13) sont formées par le plafond (18).
